# EUROPÄISCHE PATENTSCHRIFT

(11) **EP 0 572 813 B1**
(45) Veröffentlichungstag und Bekanntmachung des Hinweises auf die Patenterteilung: **22.01.1997**
(21) Anmeldenummer: 93107258.1
(22) Anmeldetag: 05.05.1993
(51) Int. Cl.: C04B 18/10, B09B 3/00

(54) **Verfahren zum Entsorgen von Rauchgasrückständen**
Process for the disposal of flue gas residues
Procédé pour l'élimination des résidus de gaz de fumée

(30) Priorität: 05.06.1992 CH 1817/92
(43) Veröffentlichungstag der Anmeldung: 08.12.1993
(73) Patentinhaber: Von Roll Umwelttechnik AG, 8005 Zürich (CH)
(72) Erfinder: Frey, Rudolf, CH-8307 Effretikon (CH)
(74) Vertreter: Patentanwälte Schaad, Balass, Menzl & Partner AG

(56) Entgegenhaltungen:
- EP-A- 0 380 713
- EP-A- 0 482 335
- WO-A-89/12609
- CH-A- 676 116
- DE-A- 3 710 319
- DE-A- 4 103 322
- US-A- 4 804 147
- RESOURCES CONSERVATION AND RECYCLING Bd. 2, Nr. 3, 1989, AMSTERDAM NL Seiten 211 - 227, XP103120 JOO-HWA TAY

## Beschreibung

Rückstände, die bei der Reinigung von Rauchgasen von Verbrennungsanlagen anfallen, insbesondere Flugasche, enthalten Schwermetalle, weshalb sie nicht direkt in Abfalldeponien entsorgt werden können.

Es wurde bereits in der DE-B 33 20 466 (US-A 4,617,180) vorgeschlagen, die anfallenden schwermetallhaltigen Flugstäube mit einer sauren Lösung zu extrahieren und mit einem Fällungsmittel auszufällen. Der erhaltene Niederschlag mit hohem Schwermetallgehalt wurde dann der Metallrückgewinnung zugeführt. Der extrahierte Rückstand, der noch kleine Mengen an Schwermetallen enthielt, wurde in die Verbrennungsanlage zurückgeführt und unter Wärmeeinwirkung in die Schlacke der Anlage eingebunden. Diese Art der Entsorgung ist aufwendig und kann zu einer Anreicherung von Schwermetallen in der Verbrennungsanlage führen.

Aus der EP-A 0 482 335 ist es bekannt, die nach der sauren Extraktion im Extraktionsrückstand verbleibenden Schwermetalle mit der wässrigen Lösung eines Fällungsmittels zu immobilisieren. Wenn der auf diese Weise inertisierte pulverförmige Extraktionsrückstand der Deponie zugeführt wird, kann er im trocknen Zustand vom Wind und bei Regen durch das Wasser verfrachtet werden. Auch hier werden die Schwermetalle aus dem Extrakt ausgefällt.

Bei beiden bekannten Verfahren muss für den Niederschlag mit hohem Schwermetallgehalt ein Auslass gefunden werden. Wenn die Rückgewinnung aus wirtschaftlichen oder technischen Gründen nicht möglich ist, muss dieser Niederschlag, den jeweiligen Vorschriften entsprechend, umweltverträglich entsorgt werden.

Aufgabe der vorliegenden Erfindung ist es deshalb, ein Verfahren vorzuschlagen, mit welchem sowohl der extrahierte Rückstand als auch der schwermetallhaltige Niederschlag, voneinander unabhängig oder miteinander, umweltgerecht entsorgt werden können.

Diese Aufgabe wird durch die Merkmale des kennzeichnenden Teils des Anspruches 1 gelöst. Bevorzugte Ausführungsformen der Erfindung bilden den Gegenstand der Ansprüche 2 bis 11.

Erfindungsgemäss erzielt man eine umweltgerechte Entsorgung sowohl der extrahierten Rückstände als auch des schwermetallhaltigen Niederschlages. Einerseits wird aus einem Teil des zu entsorgenden Materials eine Entsorgungshilfe, nämlich die Formkörper für die Abgrenzung von Deponieräumen, gebildet; andererseits bilden die von diesen Formkörpern abgegrenzten Räume beständige, inerte Behälter für das übrige zu entsorgende Material und schützen diese gegen äussere Einflüsse, insbesondere Abtragen und Verfrachten durch Wind und Wasser und Auslaugen durch Wasser. Dabei können, je nach Bedarf, beliebige Anteile der anfallenden Rückstände zu Formkörpern, d.h. Bausteinen, verarbeitet werden. Vorteilhaft werden die Formkörper aus dem schwermetallhaltigen Niederschlag und die in die vorgebildeten Räume einzubringende plastische Mischung aus dem extrahierten Rückstand gebildet. Sofern der schwermetallhaltige Niederschlag der Metallrückgewinnung zugeführt wird, können auch die Formkörper aus dem extrahierten Rückstand gebildet werden.

Soll der schwermetallhaltige Niederschlag auch deponiert werden, wird er nach der Abtrennung von der Mutterlauge - vorzugsweise mittels einer Filterpresse - einer mechanischen Beanspruchung unterworfen. Dabei wird das im Filterkuchen enthaltene Wasser freigesetzt und der Niederschlag zu einer pastösen, breiartigen Masse resuspendiert. Das freigesetzte Wasser dient gleichzeitig zum Abbinden des zugegebenen hydraulischen Bindemittels. Vorzugsweise wird eine der freigesetzten Wassermenge entsprechende Bindemittelmenge zugegeben. Die Menge des freigesetzten Wassers kann, auf Grund von Vorversuchen, über die Menge der bei der mechanischen Beanspruchung zugeführten Energie, z.B. Stromaufnahme, geregelt und optimiert werden. Die mechanische Beanspruchung erfolgt vorzugsweise mittels Scheerkräfte, beispielsweise mittels eines Zwangsmischers. Die mittels mechanischer Beanspruchung freigesetzte kontrollierbare Wassermenge erlaubt eine genaue Bemessung der Bindemittelzugabe und ergibt nach dem Abbinden mit dem hydraulischen Bindemittel Formkörper von grosser Beständigkeit. Es wird vermutet, dass die grosse Beständigkeit, insbesondere gegenüber Auslaugen durch Wasser, auf der durch dieses Verfahren erzielten optimalen Porengrösse beruht. Als Bindemittel für den schwermetallhaltigen Niederschlag wird im allgemeinen ein Zement, vorzugsweise Portlandzement, verwendet.

Die Art und Menge der Bindemittelzugabe zum extrahierten Rückstand richtet sich einerseits nach dessen Zusammensetzung, denn er kann auch Bindemitteleigenschaften besitzen, und andererseits danach, ob die Entsorgung in Form von Formkörpern oder von flüssiger Masse erfolgt.

Die Erfindung wird anhand eines Fliessschemas und eines Beispiels weiter veranschaulicht.

In der im Fliessschema dargestellten Ausführungsform der Erfindung wird Flugstaub und saure Waschflüssigkeit aus einem Nasswäscher für Rauchgas in einem Rührkessel zusammengeführt. Hier werden die Schwermetalle aus dem in der sauren Waschflüssigkeit suspendierten Flugstaub herausgelöst oder extrahiert. Die Suspension gelangt aus dem Rührkessel auf einen Vakuumbandfilter, auf dem der extrahierte Rückstand vom schwermetallhaltigen Extrakt getrennt wird. Der Extrakt wird der Metallfällung zugeführt, die mit bekannten Fällungsmitteln erfolgt. Der ausgefällte Schwermetallniederschlag wird in einer Filterpresse von der Mutterlauge getrennt. Letztere wird als Abwasser entsorgt. Der Filterkuchen aus der Filterpresse wird einem Zwangsmischer zugeführt, in dem einerseits gebundenes Wasser freigesetzt wird, wobei der Filterkuchen in eine breiartige Form übergeführt wird, und andererseits das hydraulische Bindemittel zudosiert wird. Die bindemittelhaltige Masse wird einer Formeinrichtung zugeführt und zu Blöcken geformt, mit denen in einer Deponie Wände gebildet werden, die vorzugsweise einen U-förmigen Raum begrenzen.

Der auf dem Vakuumbandfilter zurückbleibende Extraktionsrückstand wird einem Mischer zugeführt und mit einem geeigneten Bindemittel versetzt. Die noch plastische Masse wird vor dem Abbinden schichtweise in die durch die Blöcke gebildeten Räume schichtweise eingelagert, vorzugsweise verdichtet und aushärten gelassen.

### Beispiel

Bei der Verbrennung von 1 t Müll werden
- 250 kg: Schlacke
- 25 kg: Flugasche (aus Kessel, Elektro- und Gewebefilter) und
- 112 kg: saures Waschwasser (enthaltend 4,5 kg HCl (100 %) und 3 kg Na₂SO₄
erhalten.

Die Flugasche wird mit dem sauren Waschwasser während etwa 30 Minuten in einer Rührkesselkaskade extrahiert. Dabei werden aus der Flugasche die Schwermetalle, die bei einem pH-Wert von 3 bis 4 löslich sind, herausgelöst. Die extrahierte Flugasche, d.h. der extrahierte Rückstand, wird auf einem Vakuumbandfilter vom schwermetallhaltigen Waschwasser, d.h. dem Extrakt, getrennt und mit Wasser gewaschen. Dem Wasser kann eine geringe Menge eines Fällungsmittels für Schwermetalle zugegeben werden, um verbleibende Spuren von Schwermetallen zu immobilisieren. Der feuchte Extraktionsrückstand wird mit 50 kg CaO pro Tonne Extraktionsrückstand vermischt. Die erdfeuchte bindemittelhaltige Mischung wird schichtweise in vorbereitete Räume einer Deponie eingebracht und mittels Walzen und Stampfen verdichtet. Die vollständige Aushärtung und Verfestigung des Rückstandes erfolgt, in Abhängigkeit von der Zusammensetzung, etwa in 20 Tagen.

Der pH-Wert des sauren Filtrates vom Vakuumbandfilter, d.h. des Extraktes, wird in einer Abwasserbehandlungsanlage mit Ca(OH)₂ auf 9 bis 10 eingestellt und mit einem Flockungsund Fällungsmittel behandelt. Der erhaltene Niederschlag wird in einer Filterpresse entwässert und in einem sogenannten Pflugscharmischer intensiv bearbeitet. Geeignete Pflugscharmischer werden von der Firma Lödige, D-4790 Paderborn, vertrieben. Im Pflugscharmischer wird das im Filterkuchen gebundene Wasser freigesetzt und der Filterkuchen in eine breiartige pastöse Form übergeführt. Dieser Vorgang wird durch Beobachten der Stromaufnahme des Antriebmotors des Pflugscharmischers kontrolliert. Wenn die Stromaufnahme einen Minimalwert erreicht hat, ist der Vorgang beendet. In diesem Zeitpunkt werden 500 bis 1000 kg Portlandzement als hydraulisches Bindemittel pro Tonne Filterkuchen zugegeben. Andere hydraulische Bindemittel auf Basis von Calziumsilikaten oder Calziumaluminaten sind ebenfalls geeignet. Nach gründlichem Mischen der bindemittelhaltigen Masse wird sie in Stahlformen vom 1 m Kantenlänge gegeben und auf einem Rütteltisch verdichtet. Die Verdichtung kann auch mittels einer oder mehreren bekannten Vibrationsnadeln erfolgen. Nach drei Tagen werden die transportfesten Blöcke ausgeschalt. Mit den Blöcken werden auf einer Deponie Begrenzungsmauern für Räume zur Aufnahme des mit einem hydraulischen Bindemittel versetzten Extraktionsrückstandes gebildet.

Das erfindungsgemäss entsorgte Material, d.h. sowohl der Extraktionsrückstand als auch der schwermetallhaltige Niederschlag, sind gegen Umwelteinflüsse stabil und entsprechen den Vorschriften der schweizerischen Verordnung für Abfälle vom 01.02.1991.

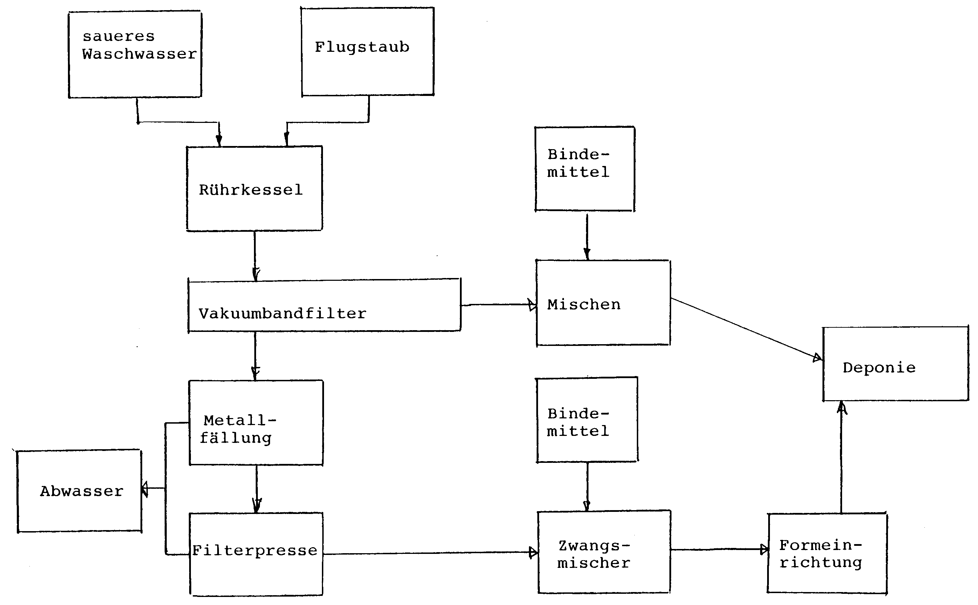

## Patentansprüche

1. Verfahren zum Entsorgen von bei der Rauchgasreinigung anfallenden festen Rückständen, insbesondere von Flugstäuben, durch saure Extraktion der Schwermetalle aus den Rückständen, Fällen der Schwermetalle aus dem Extrakt mit nachfolgender mechanischer Trennung des schwermetallhaltigen Niederschlages von der Mutterlauge, dadurch gekennzeichnet, dass man den von der Mutterlauge befreiten schwermetallhaltigen Niederschlag einer mechanischen Beanspruchung unterwirft, wobei das im Niederschlag enthaltene Wasser freigesetzt und darin der schwermetallhaltige Niederschlag resuspendiert wird, den resuspendierten schwermetallhaltigen Niederschlag und/oder die extrahierten Rückstände voneinander getrennt mit je einem hydraulischen Bindemittel versetzt, mit der bindemittelhaltigen Mischung Formkörper bildet, die Formkörper aushärten lässt, mit den ausgehärteten Formkörpern auf einer Deponie Wände zur Abgrenzung von Deponieräumen bildet, und/oder die noch plastische bindemittelhaltige Mischung schichtweise in vorgebildete Deponieräume einträgt und aushärten lässt.

2. Verfahren nach Anspruch 1, dadurch gekennzeichnet, dass man den von der Mutterlauge getrennten schwermetallhaltigen Niederschlag einer mechanischen Beanspruchung unterwirft, wobei das im Niederschlag enthaltene Wasser freigesetzt und darin der schwermetallhaltige Niederschlag resuspendiert wird, ein hydraulisches Bindemittel zugibt und mit der noch plastischen bindemittelhaltigen Mischung Formkörper bildet, die Formkörper aushärten lässt und mit den ausgehärteten Formkörpern auf einer Deponie Wände zur Abgrenzung von Deponieräumen bildet.

3. Verfahren nach Anspruch 2, dadurch gekennzeichnet, dass man als hydraulisches Bindemittel Portlandzement verwendet.

4. Verfahren nach Anspruch 1, dadurch gekennzeichnet, dass man die extrahierten Rückstände mit einem hydraulischen Bindemittel versetzt und die erhaltene Mischung in noch plastischer Form in vorgebildete Deponieräume schichtweise deponiert und verdichtet.

5. Verfahren nach Anspruch 4, dadurch gekennzeichnet, dass man als Bindemittel Calziumoxid verwendet.

6. Verfahren nach Anspruch 1, dadurch gekennzeichnet, dass man die extrahierten Rückstände mit einem hydraulischen Bindemittel versetzt und aus der erhaltenen bindemittelhaltigen Mischung Formkörper bildet, die Formkörper aushärten lässt und mit den ausgehärteten Formkörpern auf einer Deponie Wände zur Abgrenzung von Deponieräumen bildet.

7. Verfahren nach einem der vorangehenden Ansprüche, dadurch gekennzeichnet, dass man die extrahierten Rückstände mit einem Fällungsmittel für Schwermetalle versetzt.

8. Verfahren nach einem der vorangehenden Ansprüche, dadurch gekennzeichnet, dass man den schwermetallhaltigen Niederschlag mit einer Filterpresse von der Mutterlauge trennt.

9. Verfahren nach einem der vorangehenden Ansprüche, dadurch gekennzeichnet, dass man den von der Mutterlauge befreiten schwermetallhaltigen Niederschlag mit einem Zwangsmischer mechanisch beansprucht.

10. Verfahren nach Anspruch 9, dadurch gekennzeichnet, dass man die mechanische Beanspruchung so lange fortsetzt, bis die Stromaufnahme des Mischermotors einen Minimalwert erreicht hat.

11. Verfahren nach einem der vorangehenden Ansprüche, dadurch gekennzeichnet, dass man dem resuspendierten schwermetallhaltigen Niederschlag eine Bindemittelmenge zugibt, die mit dem freigesetzten Wasser abbindet.

## Claims

1. Process for the disposal of solid residues obtained in flue gas purification, in particular of flue dusts, by acidic extraction of the heavy metals from the residues, precipitation of the heavy metals from the extract with subsequent mechanical separation of the precipitate containing heavy metals from the mother liquor, characterised in that the precipitate containing heavy metals and freed from the mother liquor is subjected to mechanical stress, the water contained in the precipitate being released and the precipitate containing heavy metals being resuspended therein, a hydraulic binder is added to the resuspended precipitate containing heavy metals and/or to the extracted residues separately from one another, mouldings are formed with the binder-containing mixture, the mouldings are allowed to harden, walls for defining landfill spaces are formed with the hardened mouldings on a landfill and/or the still plastic binder-containing mixture is introduced in the form of layers into pre-formed landfill spaces and allowed to harden.

2. Process according to Claim 1, characterised in that the precipitate containing heavy metals and separated from the mother liquor is subjected to mechanical stress, the water contained in the precipitate being released and the precipitate containing heavy metals being resuspended therein, a hydraulic binder is added and mouldings are formed with the still plastic binder-containing mixture, the mouldings are allowed to harden and walls for defining landfill spaces are formed with the hardened mouldings on a landfill.

3. Process according to Claim 2, characterised in that Portland cement is used as the hydraulic binder.

4. Process according to Claim 1, characterised in that a hydraulic binder is added to the extracted residues, and the mixture obtained, in the form which is still plastic, is introduced in the form of layers into pre-formed landfill spaces and compacted.

5. Process according to Claim 4, characterised in that calcium oxide is used as the binder.

6. Process according to Claim 1, characterised in that a hydraulic binder is added to the extracted residues and mouldings are formed from the binder-containing mixture obtained, the mouldings are allowed to harden and walls for defining landfill spaces are formed with the hardened mouldings on a landfill.

7. Process according to any of the preceding claims, characterised in that a precipitating agent for heavy metals is added to the extracted residues.

8. Process according to any of the preceding claims, characterised in that the precipitate containing heavy metals is separated from the mother liquor using a filter cake.

9. Process according to any of the preceding claims, characterised in that the precipitate containing heavy metals and freed from the mother liquor is subjected to mechanical stress using a positive mixer.

10. Process according to Claim 9, characterised in that the mechanical stress is continued until the power consumption of the mixer motor has reached a minimum value.

11. Process according to any of the preceding claims, characterised in that an amount of binder which sets with the water released is added to the resuspended precipitate containing heavy metals.

## Revendications

1. Procédé pour l'élimination des résidus solides qui se forment lors du nettoyage des gaz de fumées, en particulier de poussières, par extraction acide des métaux lourds de ces résidus, et précipitation des métaux lourds de l'extrait avec séparation mécanique subséquente du précipité contenant ces métaux lourds de la solution-mère, caractérisé en ce que l'on soumet le précipité contenant des métaux lourds, débarrassé de la solution-mère, à une sollicitation mécanique, étant donné que l'eau contenue dans le précipité est libérée et que le précipité contenant des métaux lourds y est remis en suspension, que l'on fait réagir le précipité contenant des métaux lourds, remis en suspension, et/ou les résidus extraits séparés les uns des autres avec, à chaque fois, un liant hydraulique, en ce que l'on forme avec le mélange contenant le liant des solides, que l'on laisse ces solides durcir, que l'on forme, avec les solides durcis, des parois en vue de la limitation des zones de dépôt, et/ou que l'on introduit le mélange encore plastique contenant le liant, par couches, dans les zones de dépôt préformées et que l'on laisse durcir ce dernier.

2. Procédé selon la revendication 1, caractérisé en ce que l'on soumet le précipité contenant des métaux lourds, séparé de la solution-mère, à une sollicitation mécanique, l'eau contenue dans le précipité étant libérée et le précipité contenant les métaux lourds y étant remis en suspension, en ce que l'on ajoute un liant hydraulique et que l'on forme avec le mélange encore plastique contenant ces métaux lourds des solides, en ce que l'on laisse ces solides durcir et que l'on forme, avec les solides durcis, des parois en vue de la limitation de zones de dépôt.

3. Procédé selon la revendication 2, caractérisé en ce que l'on utilise, comme liant hydraulique, du ciment de Portland.

4. Procédé selon la revendication 1, caractérisé en ce que l'on fait réagir les résidus extraits avec un liant hydraulique et en ce que l'on dépose et densifie le mélange obtenu dans la forme encore plastique, dans les zones de dépôt préformées.

5. Procédé selon la revendication 4, caractérisé en ce que l'on utilise, comme liant, de l'oxyde de calcium.

6. Procédé selon la revendication 1, caractérisé en ce que l'on fait réagir les résidus extraits avec un liant hydraulique et que l'on forme, à partir du mélange obtenu contenant ce liant, des solides, que l'on laisse ces solides de forme durcir et que l'on forme, avec les solides durcis, des parois en vue de la limitation des zones de dépôt.

7. Procédé selon l'une quelconque des revendications précédentes, caractérisé en ce que l'on fait réagir les résidus extraits avec un agent de précipitation pour métaux lourds.

8. Procédé selon l'une quelconque des revendications précédentes, caractérisé en ce que l'on sépare le précipité contenant des métaux lourds de la solution-mère à l'aide d'une presse-filtre.

9. Procédé selon l'une quelconque des revendications précédentes, caractérisé en ce que l'on sollicite mécaniquement le précipité contenant des métaux lourds, débarrassé de la solution-mère, à l'aide d'un malaxeur à mélange forcé.

10. Procédé selon la revendication 9, caractérisé en ce que l'on poursuit la sollicitation mécanique jusqu'à ce que la consommation de courant du moteur du malaxeur ait atteint une valeur minimale.

11. Procédé selon l'une quelconque des revendications précédentes, caractérisé en ce que l'on ajoute, au précipité contenant des métaux lourds remis en suspension, une quantité de liant qui a un effet de liaison avec l'eau libérée.
